# EUROPEAN PATENT APPLICATION

(11) **EP 4 782 123 A1**
(43) Date of publication of application: **29.07.2026**
(21) Application number: 24879206.1
(22) Date of filing: 16.10.2024
(51) Int. Cl.: B21J 15/12, F16B 19/10, B21J 15/14

(54) **TOOL FOR AUTOMATICALLY PLACING MANUAL RIVETS**

(30) Priority: 17.10.2023 ES 202330856
(71) Applicant: Loxin 2002, S.L., 31191 Esquiroz (Navarra) (ES)
(72) Inventor: DIAZ DE RADA LORENTE, Carlos, 31195 ESQUÍROZ (Navarra) (ES)
(74) Representative: Schäfer, Matthias W.
(86) International application number: PCT/ES2024/070627
(87) International publication number: WO 2025/083310

(57) **Abstract**

Tool for automatic placement of manual rivets based on the rotation of a threaded stem that displaces a deformable sleeve on a non-deformable body of the rivet until the threaded inner rod breaks in a breaking slot, by means of a housing for the polygonal nut of the manual rivet, securing it by means of a combination of claws and retractable pins, simultaneously inserting the threaded stem into a turning key capable of limited rotation in travel and torque for insertion, and of total multi-turn rotation for full torque riveting, from a preloaded rotating shaft, all associated with an actuator provided with rotation capacity, external to the tool.

Its main advantage is to allow the use of manual rivets in an automated way, capable of coupling to an automatic system, only provided until now for insertion with manual tools, avoiding the need for double stock.

## Description

The present specification relates, as its title indicates, to a tool for automatic placement of manual rivets of those used industrially, especially in the aeronautical construction industry, and which are based on the rotation of a threaded stem that displaces a deformable sleeve on a non-deformable body of the rivet until the threaded inner rod breaks in an appropriately provided breaking slot, the rivet being installed in the desired position. This tool uses a housing for a polygonal nut of the manual rivet, securing it by means of a combination of claws and retractable pins, simultaneously inserting the threaded stem into a turning key capable of limited rotation in travel and limited torque for insertion of driving faces, and full multi-turn rotation for riveting with full torque, from a preloaded rotating shaft, all associated with an actuator provided with rotation capacity external to the tool.

### Field of the invention

The invention relates to the field of automatic rivet placement tools, especially manual rivets, for industry, mainly for the aeronautical industry.

### State of the art

At present in the field of industrial construction, rivets are a widely used and known joining element. Within the aeronautical industry, rivets are especially used based on the rotation of a threaded stem that displaces a deformable sleeve on a non-deformable body of the rivet until the threaded inner rod breaks in an appropriately provided breaking slot, leaving the rivet installed in the desired position, and leaving a surplus part as the remnant. Normally they use a polygonal nut, usually hexagonal, wherefrom the end of the threaded stem emerges, provided with at least one longitudinal flat face, usually two, which allow its rotation with respect to the polygonal nut to produce the placement of the rivet. Examples of these rivets can be found, for example, in EP0244782 "*Blind fastener with deformable drive nut and method of fastening panels using the same*", EP0775837 "*Blind fastener with deformable drive*", US5350264A "*Blind fastener with reinforced containment sleeve*" and US6036418A *"Self-expanding blind fastener with mechanical lock".*

These types of rivets are designed to be inserted and riveted using manual tools, as for example disclosed in US4691552A "*Head for blind rivet installation tools*". These rivets have always been installed manually with a hand tool supplied by the rivet supplier. These supplier tools are manual and consider the flexibility and sensitivity of the human arm to be able to install the rivets in the tool. This makes its use problematic in automated and robotic environments, where the flexibility of the human hand in loading rivets in the tool disappears, and the demands on precision and speed are higher than those that a person with manual tools can provide. In addition, it has the additional drawback that each tool is prepared only for the use of rivets with a specific nut shape, usually hexagonal, and for other types of rivets with another nut shape, a different tool is necessary, or a change of the insertion mouth if possible.

Some manufacturers, aware of this problem, also supply variants of these rivets suitable for automated assembly, as for example disclosed in WO2019032633 "*Blind fastener with a slotted expansion body*". These automatable variants have a different configuration from the manual model, and require a tool or adapter different from the manual, since they use two cylindrical elements with a smooth surface, one cylindrical element being integral with the threaded stem and the other cylindrical element having the ability to rotate with respect to it. In this way, by rotating one cylindrical element on the other cylindrical element, the rivet is installed. The rivet manufacturer is the one that usually provides specific tools for automatic insertion, as for example disclosed in EP0195851 "*Installing tool for wedging-type fasteners*", but has the great drawback that, being different rivet models in their manual version and in their automatic version, it makes it necessary to have a differentiated stock, which must also be purchased separately. Furthermore, the price of rivets in their automatic variant is usually much higher than manual rivets, due to their greater construction complexity, which makes their use very expensive and makes it necessary to look for other cheaper alternatives. The high cost of the rivets in their automatic variant also requires that the residual part of the rivet that remains after its placement must be recovered to allow its reuse in the construction of new rivets, greatly complicating the management of waste in the manufacturing process.

Other assemblies of rivets and tools are also known, such as those disclosed in ES2620797 *"Remache para fijación ciega, herramienta de instalación asociada y método de instalación de un remache de este tipo*", ES2837534 "*Herramienta y procedimiento de instalación de una fijación ciega*" and EP0466609 "*Outil pour la pose d 'agrafes d* 'épinglage", but they are specific rivets for those tools, they cannot be used by hand, in addition to the fact that these types of rivets are not so versatile for use in aeronautical technology.

Therefore, within the current state of the art, no tool, head or module is known for the installation of rivets that allows automating the placement of manual rivets that have always been considered non-automatable, especially those that use a polygonal nut wherefrom the end of the threaded stem emerges, provided with at least one longitudinal flat face, usually two, that allow its rotation with respect to the polygonal nut to produce the placement of the rivet.

### Description of the invention

To resolve the current problem regarding the need for different rivet models for manual insertion, and for automatic insertion in the manufacturing processes, the tool for automatic placement of manual rivets object of the present invention has been devised, which comprises
- a cylindrical housing for housing the polygonal nut of the manual rivet, provided with gripping and locking means in longitudinal and rotational direction,
- a turning key adjacent to the cylindrical housing for the polygonal nut, capable of axial displacement inwards in opposition to a spring, provided with a housing with two flat faces of section and dimensions compatible with the threaded stem of the manual rivet, and alignment and coupling means of said turning key with the emerging end of the threaded stem,
- expulsion means of the threaded rod from the housing of said turning key,
- rotation means of the turning key through a preloaded rotating shaft, and
- coupling means of the preloaded rotating shaft to an external actuator provided with rotation capacity, which may preferably be pneumatic or electric,
all the means, except the rotation means of the turning key and of the preloaded rotating shaft, being pneumatically actuable in an automated way in cooperation with a plurality of sensors of position of the elements and insertion of the manual rivet.

The gripping means of the polygonal nut comprises,
- as a longitudinal locking mechanism, a plurality of claws on the sides of the cylindrical housing which, in a closed position, grip the polygonal nut in longitudinal direction, retaining it inside the cylindrical housing, and
- as a rotation locking mechanism, a plurality of retractable pins, peripherally distributed inside the main cylindrical housing, each provided with a spring and a lateral housing, enabling a retracted position wherein, independently of the others, the retractable pin that by its coincident position is pushed over the polygonal nut when inserted into the cylindrical housing, moves axially into the lateral housing pressing the spring, and enabling an extended position of the retractable pins wherein each, independently of the others, is maintained in its extended position closest to the opening of the cylindrical housing by the thrust of the spring at those points where the position of the polygonal nut allows it, blocking their possible rotation.

The alignment and coupling means of the turning key with two flat faces with the emerging end of the threaded stem of the manual rivet comprises,
- chamfers arranged at the inlet to the housing of the turning key with an angle of up to 30°, making it possible to directly absorb a misalignment between the turning key and threaded stem of less than 30°, and
- a spindle with a nut that, when advancing, rotates the turning key in a limited way with respect to its axis, by means of a mechanical coupling, allowing the flat faces of the housing of the turning key to be aligned with the flat faces of the emerging end of the threaded stem of the manual rivet allowing its insertion into the housing, and also provided with a ball circulating along a closed spiral-shaped path, capable of subsequently actuating a nut with a toothing that allows free rotation in one position, disengaging the nut from the spindle, and allowing free rotation of the spindle.

The preloaded rotating shaft comprises
- a spring clutch coaxially arranged with the preloaded rotating shaft and provided with a plurality of selectable stop positions depending on the desired preloading torque for the preloaded rotating shaft, and
- a partially spiral slot wherethrough a lug integral with the preloaded rotating shaft moves.

The expulsion means of the threaded stem of the housing of said turning key comprises a piston longitudinally displaceable inside the spindle and the turning key cooperating with a retaining spring in the rest position.

This tool for automatic placement of manual rivets gives rise to a method of automatic placement of manual rivets, which comprises
- a phase of securing the manual rivet, supplied by an external feeder, in the cylindrical housing,
- in the event that, in the phase of securing the manual rivet, the threaded stem of the manual rivet has not entered directly into the housing of the turning key and has not been detected by the appropriate insertion sensor, a phase of insertion of the threaded stem of the manual rivet into the housing of the turning key will be performed,
- a phase of riveting,
- a phase of removal of the tool from the point where the manual rivet has been placed, by displacing the tool using the external actuator in cooperation with the appropriate positioning sensors and
- a phase of expulsion of the remnants of the manual rivet to an external remnant collection device.

The phase of securing the manual rivet in the cylindrical housing comprises
- a step of inserting the manual rivet, supplied by an external feeder, into the cylindrical housing, with the threaded stem inwards, until the polygonal nut is fitted into said cylindrical housing, and
- a step of securing the manual rivet by means of the gripping means of the polygonal nut, and the locking mechanisms in longitudinal and rotational direction, which comprises
   - a step of closing the claws on the polygonal nut, and
   - a step of releasing the retractable pins that allows those retractable pins in a position not coinciding with the polygonal nut to move axially towards the opening of the cylindrical housing by the thrust of the spring inserted in its lateral housing at those points where the position of the polygonal nut allows it, blocking their possible rotation, the rest of the retractable pins being locked in their lateral housings, without being able to move through the polygonal nut, both steps can be performed simultaneously.

The phase of insertion of the threaded stem of the manual rivet into the housing of the turning key comprises
- a step of rotating the spindle that, by means of the nut, rotates, limited by the ball circulating along a closed spiral-shaped path, the turning key with respect to its axis, by means of a mechanical coupling, allowing the flat faces of the housing of the turning key to be aligned with the flat faces of the emerging end of the threaded stem of the manual rivet, making it possible to insert it into the housing, and
- a step of actuating the nut with a toothing that allows free rotation in one position, disengaging the nut from the spindle, and allowing from this moment the free rotation of the spindle, and therefore of the turning key with the threaded stem of the manual rivet already inserted therein.

The phase of riveting comprises
- a step of preloading, wherein the preloaded rotating shaft is rotated until the spring clutch allows it, with a limited torque depending on the preloading torque selected by the stop positions, at which point the lug, circulating through the partially spiral slot, releases the rotation and sends a signal by means of a preload sensor of the spring so that the external actuator stops and no longer rotates, preventing involuntary riveting,
- a step of positioning the manual rivet at the point where it is desired to be inserted, performed by displacing the tool by means of the external actuator in cooperation with the appropriate positioning sensors, and
- a step of rotating the threaded stem by activating the external actuator causing the rotation, with all the torque, of the threaded stem of the manual rivet by means of the spindle and the turning key, actuated by the coupling means of the preloaded rotating shaft, until the breakage of the threaded stem of the manual rivet occurs in the intended breakage slot, which is detected by a torque sensor.

The phase of expulsion of the remnants of the manual rivet comprises
- a step of opening the claws on the polygonal nut, releasing it, and
- a step of actuating the piston pushing the remaining threaded stem, and thus also the polygonal nut, out of the cylindrical housing, and thus out of the tool

### Advantages of the invention

This tool for automatic placement of manual rivets that is presented provides multiple advantages over currently available systems, the most important one being that it allows the automated use of manual rivets, capable of coupling to an automated system or a robot, only provided until now for insertion with manual tools.

It should also be noted that, thanks to having a cylindrical housing equipped with nut gripping means and locking mechanisms in longitudinal and rotational direction independent of the number of faces that the nut has, the tool can be used with rivets provided with nuts other than hexagonal ones, which is the most widespread, without the need for any adaptation or change of inlet.

Another important advantage is that it eliminates the need to have double storage stock of the rivets in manual version and in automatic version, which was necessary until now, making it possible to unify a single reference.

Another advantage of the present invention is that it allows the positioning of the manual rivets much more quickly and accurately than with manual tools.

Another of the most important advantages to highlight is the financial savings involved in reducing the need for double stock, in manual and automatic models, allowing to optimise purchase prices by only needing the manual model and being able to buy it in much larger quantities. Since the cost of automated rivets is typically up to 70% higher, the cost savings can be significant.

Importantly, this tool automatically allows rivet pick-up and installation, being especially flexible and adaptable to other rivets of other gears and systems.

It is also important to note that this tool allows a unified management of the generated waste, being a non-reusable disposable part, while the conventionally used automated rivet makes it necessary to recover the surplus for reuse due to the high price, which complicates the waste management process.

### Description of the figures

In order to better understand the object of the present invention, a preferred practical embodiment of a tool for automatic placement of manual rivets is portrayed in the annexed drawing.

In said drawing, figure -1- shows front and side views of the tool, indicating the sections shown in other figures.
Figure -2- shows two perspective views of the tool.
Figure -3- portrays a sectional side view of the tool.
Figure -4- portrays another sectional side view of the tool.
Figure -5- portrays another sectional side view of the tool.
Figure -6- portrays another sectional side view of the tool.
Figure -7- shows front and side views of an example of a manual rivet to be used with the tool.
Figure -8- shows a rendered detail, in perspective, of the spindle with its associated nut for the movement of the turning key and the ball circulating along a closed spiral-shaped path.
Figure -9- shows a rendered detail, in perspective, of the chamfers arranged at the inlet to the housing of the turning key.
Figure -10- shows a rendered detail, in perspective, of the end of the tool corresponding to the housing of the manual rivet, with a manual rivet inserted and secured.
Figure -11- shows a rendered detail, in perspective, of the end of the tool corresponding to the housing for the manual rivet, without manual rivet, but with the claws closed and the retractable pins in their outermost position, due to the effect of the spring.
Figure -12- shows a rendered detail, in perspective, of the end of the tool corresponding to the housing for the manual rivet, without manual rivet, but with the claws open and the retractable pins in their innermost position, showing their empty housings.

### Preferred embodiment of the invention

The constitution and characteristics of the invention may be better understood with the following description made with reference to the attached figures.

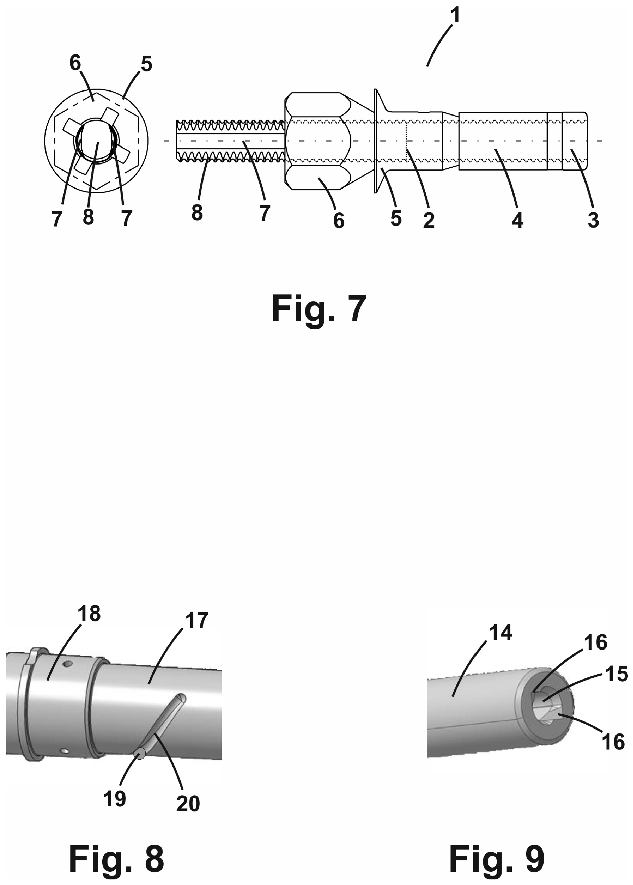

The current tool has been developed to automatically insert rivets previously only for insertion with a manual tool. These manual rivets (1), as illustrated in Figure 7, are based on the rotation of a threaded stem (8) that displaces by means of a termination (3) a deformable sleeve (4) on a non-deformable body (5) of the rivet until the threaded inner rod (1) breaks in an appropriately provided breaking slot (2), leaving the rivet installed in the desired position, and leaving a surplus part as the remnant. They use a polygonal nut (6) wherefrom the end of the threaded stem (8) emerges, provided with at least one longitudinal flat face (7), usually two, which allow its rotation with respect to the polygonal nut (6) to produce the placement of the rivet.

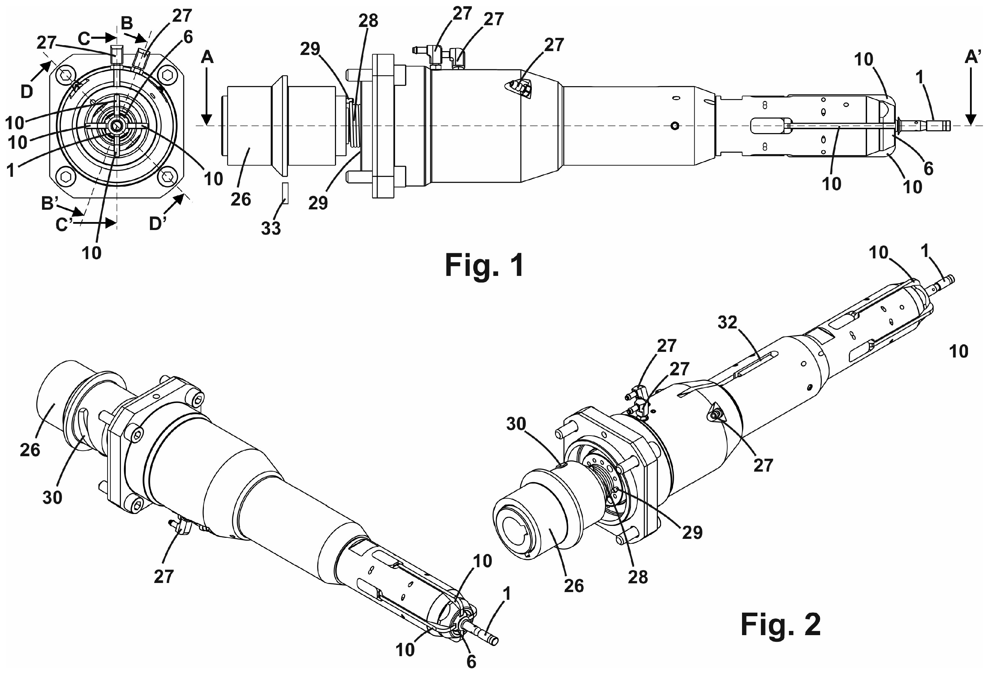

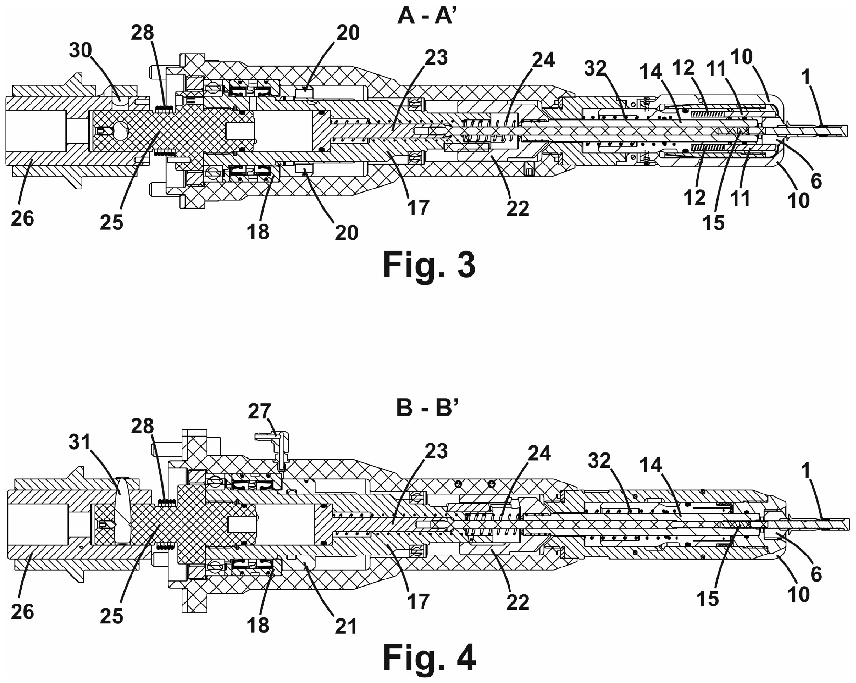

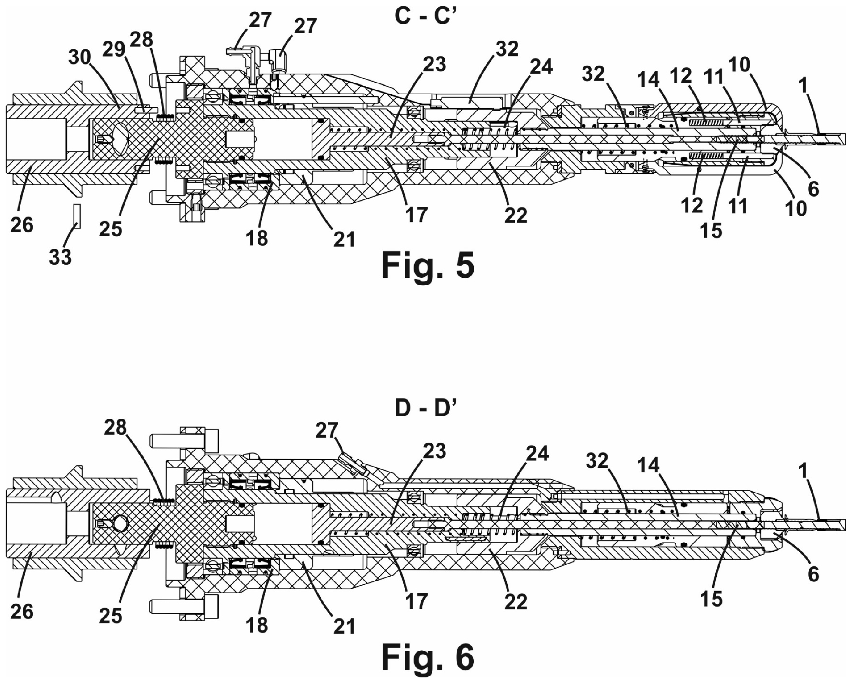

As can be seen in figures 1, 2, 3, 4, 5 and 6, it is illustrated how the tool comprises
- a cylindrical housing (9) of compatible measurements to house therein the polygonal nut (6), provided with gripping means of the polygonal nut (6), with locking mechanisms in longitudinal and rotational direction,
- a turning key (14) adjacent to the cylindrical housing (9) for the polygonal nut (6), capable of axial displacement inwards in opposition to a spring (31), provided with a housing (15) with flat faces of section and dimensions compatible with the emerging end of the threaded stem (8) of the manual rivet (1), and alignment and coupling means of said turning key with the emerging end of the threaded stem (8),
- expulsion means of the threaded stem (8) from the housing (15) of said turning key (14),
- rotation means of the turning key (14) through a preloaded rotating shaft (25), and
- coupling means (26) of the preloaded rotating shaft (25) to an external actuator provided with rotation capacity, which may preferably be pneumatic or electric.
All the means, except the rotation means of the turning key (14) and of the preloaded rotating shaft (25), being pneumatically actuable in an automated manner by means of the appropriate external connections (27) arranged in the body of the tool and the existence of a plurality of sensors of position of the elements and for insertion of the manual rivet (1), these sensors comprising at least one insertion sensor (32) that detects whether the turning key (14) has engaged with the threaded stem (8), a preload sensor of the spring (33) that detects the longitudinal displacement of the tool when the preload appears, and a torque sensor associated with the external actuator provided with rotation capacity.

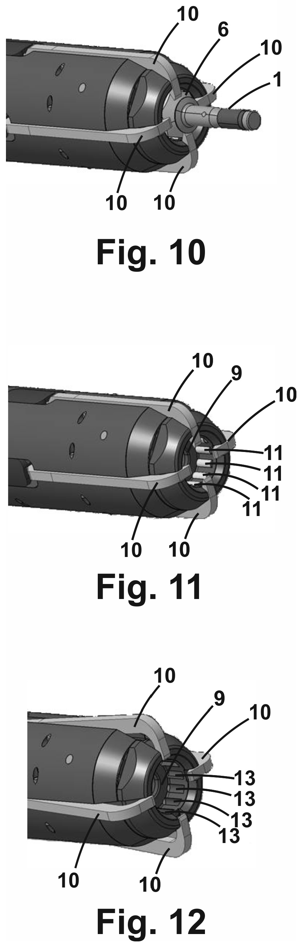

The gripping means of the polygonal nut (6) in the cylindrical housing (9) preferably comprises, as illustrated in figures 10, 11 and 12,
- as a longitudinal locking mechanism, a plurality of pneumatically actuable claws (10), arranged on the sides of the cylindrical housing, which have the appropriate shape and dimensions to, in a closed position, grip the polygonal nut (6) in longitudinal direction, and
- as a rotation locking mechanism, a plurality of retractable pins (11), preferably cylindrical, peripherally distributed inside the main cylindrical housing (9), each provided with a spring (12) and with a lateral housing (13) axially arranged, of shape and dimensions compatible with the retractable pins (11), enabling a retracted position, outside the cylindrical housing (9), wherein, independently of the others, the retractable pin (11) which by its coincident position is pushed by the polygonal nut (6) when inserted into the cylindrical housing (9), is displaced axially towards the inside of the lateral housing (13) pressing the spring (12), and enabling an extended position of the retractable pins (11) wherein each retractable pin (11), independently of the others, is maintained in its extended position closest to the opening of the cylindrical housing (9) by the thrust of the spring (12) inserted into its lateral housing (13) at those points where the position of the polygonal nut (6) allows it, blocking its possible rotation. It is provided that, in an open position of the claws (10), the polygonal nut (6) is released from the cylindrical housing (9) and the retractable pins (11) are released from their position.

The alignment and coupling means of the turning key (14) with two flat faces with the emerging end of the threaded stem (8) of the manual rivet (1) preferably comprises, as illustrated in figures 8 and 9,
- chamfers (16) arranged at the inlet to the housing (15) of the turning key (14), with an angle of up to 30°, making it possible to directly absorb a misalignment between the turning key (14) and threaded stem (8) less than 30°, and
- a spindle (17) with a nut (18) that, when advanced, rotates the turning key (14) in a limited way with respect to its axis, by means of a mechanical coupling (22), allowing the flat faces of the housing (15) of the turning key (14) to be aligned with the flat faces of the emerging end of the threaded stem (8) of the manual rivet (1) allowing its insertion into the housing (15), and also provided with a ball (19) circulating along a closed spiral-shaped path (20), capable of subsequently actuating a nut (21) with a toothing that allows the free rotation in one position, disengaging the nut (18) from the spindle (17), and allowing the free rotation of the spindle (17) integral with the transmission faces.

The preloaded rotating shaft (25) preferably comprises
- a spring clutch (28) coaxially arranged with the preloaded rotating shaft (25) and provided with a plurality of selectable stop positions (29) based on the desired preloading torque for the preloaded rotating shaft (25), and
- a partially spiral slot (30) wherethrough a lug (31) integral with the preloaded rotating shaft (25) moves.

The expulsion means of the threaded stem (8) from the housing (15) of said turning key (14) preferably comprises a pneumatically actuable piston (23), longitudinally displaceable inside the spindle (17) and the turning key (14), cooperating with a coaxially arranged spring (24) that pushes it in a non-displacement position.

This tool for automatic placement of manual rivets (1) gives rise to a method of automatic placement of manual rivets (1), which comprises
- a phase of securing the manual rivet (1), supplied by an external feeder, in the cylindrical housing (9),
- in the event that, in the phase of securing the manual rivet (1), the threaded stem (8) of the manual rivet (1) has not entered directly into the housing (15) of the turning key (14) and has not been detected by the appropriate insertion sensor (32), a phase of insertion of the threaded stem (8) of the manual rivet (1) into the housing (15) of the turning key (14) will be performed,
- a phase of riveting,
- a phase of removing the tool from the point where the manual rivet (1) has been placed, by displacing the tool using the external actuator in cooperation with the appropriate positioning sensors, and
- a phase of expulsion of the remnants from the manual rivet (1) to an external remnant collection device.

The phase of securing the manual rivet (1) in the cylindrical housing (9) comprises
- a step of inserting the manual rivet (1), supplied by an external feeder, into the cylindrical housing (9), with the threaded stem (8) towards the inside, until the polygonal nut (6) is fitted in said cylindrical housing (9), and
- a step of securing the manual rivet (1) by means of the gripping means of the polygonal nut (6), and the locking mechanisms in longitudinal and rotational direction, which comprises
   - a step of closing the claws (10) on the polygonal nut (6), and
   - a step of releasing the retractable pins (11) that allows those retractable pins (11) in a position not coinciding with the polygonal nut (6) to move axially towards the opening of the cylindrical housing (9) by the thrust of the spring (12) inserted in its lateral housing (13) at those points where the position of the polygonal nut (6) allows it, blocking its possible rotation, the rest of the retractable pins (11) being locked in their lateral housing (13), without being able to move through the polygonal nut (6),
      both steps can be performed simultaneously.

The phase of insertion of the threaded stem (8) of the manual rivet (1) into the housing (15) of the turning key (14) comprises
- a step of rotating the spindle (17) which, by means of the nut (18), rotates, limited by the ball (19) circulating along a closed spiral path (20), the turning key (14) with respect to its axis, by means of a mechanical coupling (22), allowing the flat faces of the housing (15) of the turning key (14) to be aligned with the flat faces of the emerging end of the threaded stem (8) of the manual rivet (1) enabling its insertion into the housing (15), and
- a step of actuating the nut (21) with a toothing that allows free rotation in one position, disengaging the nut (18) from the spindle (17), and allowing from this moment the free rotation of the spindle (17), and therefore of the turning key (14) with the threaded stem (8) of the manual rivet (1) already inserted therein.

The phase of riveting comprises
- a step of preloading, wherein the preloaded rotating shaft (25) is rotated until it is allowed by the spring clutch (28), with a limited torque depending on the preloading torque selected by the stop positions (29), at which point the lug (31), circulating through the partially spiral slot (30), releases the rotation and sends a signal by means of a preload sensor of the spring (33) so that the external actuator stops and no longer rotates, preventing involuntary riveting,
- a step of positioning the manual rivet (1) at the point where it is desired to be inserted, performed by moving the tool by means of the external actuator in cooperation with the appropriate positioning sensors, and
- a step of rotating the threaded stem (8) by activating the external actuator causing the rotation, with all the torque, of the threaded stem (8) of the manual rivet (1) by means of the spindle (17) and the turning key (14), actuated by the coupling means (26) of the preloaded rotating shaft (25), until the breaking of the threaded stem (8) of the manual rivet (1) occurs in the intended breaking slot (2), which is detected by the torque sensor.

The phase of expulsion of the remnants of the manual rivet (1) comprises
- a step of opening the claws (10) on the polygonal nut (6), releasing it, and
- a step of actuating the piston (23) inside the spindle (17) and the turning key (14), pushing the remaining threaded stem (8) and therefore the polygonal nut (6), out of the cylindrical housing (9), and therefore out of the tool.

Any person skilled in the art will easily understand that the characteristics of different embodiments can be combined with characteristics of other possible embodiments whenever such a combination is technically possible.

All the information referring to examples or modes of embodiment form part of the description of the invention.

## Claims

1. - Tool for automatic placement of manual rivets (1) of the type based on the rotation of a threaded stem (8), with at least one longitudinal flat face (7), with respect to a polygonal nut (6) **characterised in that** it comprises
- a cylindrical housing (9) of compatible measurements to house therein the polygonal nut (6), provided with gripping means of the polygonal nut (6), with locking mechanisms in longitudinal and rotational direction,
- a turning key (14) adjacent to the cylindrical housing (9) for the polygonal nut (6), capable of axial displacement inwards in opposition to a spring (31), provided with a housing (15) with flat faces of section and dimensions compatible with the emerging end of the threaded stem (8) of the manual rivet (1), and alignment and coupling means of said turning key with the emerging end of the threaded stem (8),
- expulsion means of the threaded stem (8) from the housing (15) of said turning key (14),
- rotation means of the turning key (14) through a preloaded rotating shaft (25), and
- coupling means (26) of the preloaded rotating shaft (25) to an external actuator provided with rotation capacity,
the gripping means of the polygonal nut (6), the locking mechanisms in longitudinal and rotational direction, and the expulsion means of the threaded stem (8) can be actuated in an automated manner by means of external connections (27) arranged on the body of the tool and a plurality of sensors of position of the elements and insertion of the manual rivet (1).

2. - Tool for automatic placement of manual rivets (1), according to the previous claim, **characterised in that** the gripping means of the polygonal nut (6) in the cylindrical housing (9) comprise
- as a longitudinal locking mechanism, a plurality of pneumatically actuable claws (10), arranged on the sides of the cylindrical housing, which have the appropriate shape and dimensions to, in a closed position, grip the polygonal nut (6) in longitudinal direction, and
- as a rotation locking mechanism, a plurality of retractable pins (11), peripherally distributed inside the main cylindrical housing (9), each provided with a spring (12) and with an axially arranged lateral housing (13), of shape and dimensions compatible with the retractable pins (11), enabling a retracted position and an extended position of each of the retractable pins (11) where the position of the polygonal nut (6) allows it.

3. - Tool for automatic placement of manual rivets (1), according to claim 2, **characterised in that** in an open position of the claws (10) the polygonal nut (6) is released from the cylindrical housing (9) and the retractable pins (11) are released from their position.

4. - Tool for automatic placement of manual rivets (1), according to any of the preceding claims, **characterised in that** the alignment and coupling means of the turning key (14) with flat faces with the emerging end of the threaded stem (8) of the manual rivet (1) comprise
- chamfers (16) arranged at the inlet to the housing (15) of the turning key (14), with an angle of up to 30°, and
- a spindle (17) with a nut (18), related to the turning key (14) by means of a mechanical coupling (22) with limited rotation, capable of aligning the flat faces of the housing (15) of the turning key (14) with the flat faces of the emerging end of the threaded stem (8) of the manual rivet (1) allowing its insertion into the housing (15), and also provided with a ball (19) circulating along a closed spiral-shaped path (20), capable of subsequently actuating a nut (21) for releasing the nut (18) of the spindle (17), allowing the free rotation of the spindle (17) integral with the transmission faces.

5. - Tool for automatic placement of manual rivets (1), according to any of the preceding claims, **characterised in that** the preloaded rotating shaft (25) comprises
- a spring clutch (28) coaxially arranged with the preloaded rotating shaft (25) and provided with a plurality of selectable stop positions (29) based on the desired preloading torque for the preloaded rotating shaft (25), and
- a partially spiral slot (30) wherethrough a lug (31) integral with the preloaded rotating shaft (25) moves.

6. - Tool for automatic placement of manual rivets (1), according to any of the previous claims, **characterised in that** the expulsion means of the threaded stem (8) from the housing (15) of said turning key (14) comprise a pneumatically actuable piston (23), longitudinally displaceable inside the spindle (17) and the turning key (14), cooperating with a coaxially arranged spring (24) that pushes it in a non-displacement position.

7. - Tool for automatic placement of manual rivets (1), according to any of the preceding claims, **characterised in that** the external actuator provided with rotation capacity associated with the preloaded rotating shaft (25) by means of the coupling means (26) is an actuator chosen from the group formed by pneumatic actuator or electric actuator.

8. - Method of automatic placement of manual rivets (1) using the tool, according to any of the preceding claims, **characterised in that** it comprises
- a phase of securing the manual rivet (1), supplied by an external feeder, in the cylindrical housing (9),
- in the event that, in the phase of securing the manual rivet (1), the threaded stem (8) of the manual rivet (1) has not entered directly into the housing (15) of the turning key (14) and has not been detected by the appropriate insertion sensor (32), a phase of insertion of the threaded stem (8) of the manual rivet (1) into the housing (15) of the turning key (14) will be performed,
- a phase of riveting,
- a phase of removing the tool from the point where the manual rivet (1) has been placed, by displacing the tool using the external actuator in cooperation with the appropriate positioning sensors and
- a phase of expulsion of the remnants from the manual rivet (1) to an external remnant collection device.

9. - Method of automatic placement of manual rivets (1), according to claim 8, **characterised in that** the phase of securing the manual rivet (1) in the cylindrical housing (9) comprises
- a step of inserting the manual rivet (1), supplied by an external feeder, into the cylindrical housing (9), with the threaded stem (8) towards the inside, until the polygonal nut (6) is fitted in said cylindrical housing (9), and
- a step of securing the manual rivet (1) by means of the gripping means of the polygonal nut (6), and the locking mechanisms in longitudinal and rotational direction.

10. - Method of automatic placement of manual rivets (1), according to claim 9, **characterised in that** the step of securing the manual rivet (1) comprises
- a step of closing the claws (10) on the polygonal nut (6), and
- a step of releasing the retractable pins (11) that allows those retractable pins (11) in a position not coinciding with the polygonal nut (6) to move axially towards the opening of the cylindrical housing (9) by the thrust of the spring (12) inserted in its lateral housing (13) at those points where the position of the polygonal nut (6) allows it, blocking its possible rotation, the rest of the retractable pins (11) being locked in their lateral housing (13), without being able to move through the polygonal nut (6), both steps can be performed simultaneously.

11. - Method of automatic placement of manual rivets (1), according to any of claims 8, 9 and 10, **characterised in that** the phase of insertion of the threaded stem (8) of the manual rivet (1) into the housing (15) of the turning key (14) comprises
- a step of rotating the spindle (17) which, by means of the nut (18), rotates, limited by the ball (19) circulating along a closed spiral path (20), the turning key (14) with respect to its axis, by means of a mechanical coupling (22), allowing the flat faces of the housing (15) of the turning key (14) to be aligned with the flat faces of the emerging end of the threaded stem (8) of the manual rivet (1) enabling its insertion into the housing (15), and
- a step of actuating the nut (21) with a toothing that allows free rotation in one position, disengaging the nut (18) from the spindle (17), and allowing from this moment the free rotation of the spindle (17), and therefore of the turning key (14) with the threaded stem (8) of the manual rivet (1) already inserted therein.

12. - Method of automatic placement of manual rivets (1), according to any of claims 8, 9, 10 and 11, **characterised in that** the phase of riveting comprises
- a step of preloading, wherein the preloaded rotating shaft (25) is rotated until it is allowed by the spring clutch (28), with a limited torque depending on the preloading torque selected by the stop positions (29), at which point the lug (31), circulating through the partially spiral slot (30), releases the rotation and sends a signal by means of a preload sensor of the spring (33) so that the external actuator stops and no longer rotates, preventing involuntary riveting,
- a step of positioning the manual rivet (1) at the point where it is desired to be inserted, performed by moving the tool by means of the external actuator in cooperation with the appropriate positioning sensors, and
- a step of rotating the threaded stem (8) by activating the external actuator causing the rotation, with all the torque, of the threaded stem (8) of the manual rivet (1) by means of the spindle (17) and the turning key (14), actuated by the coupling means (26) of the preloaded rotating shaft (25), until the breaking of the threaded stem (8) of the manual rivet (1) occurs in the breaking slot (2) provided, which is detected by a torque sensor.

13. - Method of automatic placement of manual rivets (1), according to any of claims 8, 9, 10, 11 and 12, **characterised in that** the phase of expulsion of remnants of the manual rivet (1) comprises
- a step of opening the claws (10) on the polygonal nut (6), releasing it, and
- a step of actuating the piston (23) inside the spindle (17) and the turning key (14), pushing the remaining threaded stem (8) and therefore the polygonal nut (6), out of the cylindrical housing (9), and therefore out of the tool.
